# EUROPEAN PATENT SPECIFICATION

(11) **EP 3 130 981 B1**
(45) Date of publication and mention of the grant of the patent: **19.09.2018**
(21) Application number: 15180424.2
(22) Date of filing: 10.08.2015
(51) Int. Cl.: G06F 1/18, G06F 1/26

(54) **POWER SUPPLY SYSTEM**
STROMVERSORGUNGSSYSTEM
SYSTEME D'ALIMENTATION ELECTRIQUE

(43) Date of publication of application: 15.02.2017
(73) Proprietor: Toshiba TEC Kabushiki Kaisha, Tokyo 141-8562 (JP)
(72) Inventor: HIRANO, Takahisa, Shinagawa-ku, Tokyo 141-0032 (JP)
(74) Representative: Takeuchi, Maya

(56) References cited:
- CN-Y- 201 426 013
- JP-A- 2012 150 117

## Description

### FIELD

Embodiments described herein relate to a technology of supplying power for a portable terminal device.

### BACKGROUND

When at a conference or meeting, the user of a mobile terminal device such as a smart phone a tablet computer or a notebook computer has to pay attention to the remaining capacity of the battery of the mobile terminal device as most of mobile terminal devices are battery-powered.

On the other hand, even if a power supply device is provided by the other party of the conference or meeting, it is troublesome to carry an AC adaptor for the power supply for a mobile terminal device. Even if the user of a mobile terminal device carries an AC adaptor, the plugs in the meeting room are limited in quantity or position.

To solve such problems, there is provided a table comprising a power supply system, as set out in claim 1.

Preferably, the rail supplies the power from a commercial power supply to the power supply unit.

Preferably yet, the moving body further comprises a light emitting unit; and
the control unit turns on the light emitting unit when the moving body stops at the position of the sensor.

The invention also relates to a power supply system,
wherein the moving body comprises:
an image pickup unit;
a power supply unit configured to supply power for an information terminal device; and
a control unit configured to conduct a control to stop the moving body according to the image data obtained by the image pickup unit.

Suitably, the moving body further comprises a microphone for collecting sound from the outside of the moving body; and
the control unit conducts a control to stop the moving body according to the volume of the sound data collected by the microphone.

Suitably still, the moving body further comprises: a network unit configured to control the communication with an external device of the moving body;
a microphone configured to collect sound from the outside of the moving body;
a display; and
a loudspeaker; and
the control unit causes the network unit to send the image data obtained by the image pickup unit and the sound data collected by the microphone, displays the image data received by the network unit on the display and outputs the sound data received by the network unit to the loudspeaker.

Suitably yet, the moving body further comprises a temperature sensor for detecting the temperature of the outside of the moving body and a network unit communicating with an air conditioner; and
the control unit outputs temperature information to the network unit to change the temperature detected by the moving body to a preset temperature according to the temperature detected by the temperature sensor.

Typically, the rail supplies the power from a commercial power supply to the power supply unit.

### DESCRIPTION OF THE DRAWINGS

The above, and other objects, features and advantages of the present invention will be made apparent from the following description of preferred embodiments, given as non-limiting examples, with reference to the accompanying drawings, in which:
Fig. 1 is a diagram exemplifying the structure of a system according to an embodiment;
Fig. 2 is a diagram exemplifying the structure of a system observed from above according to embodiment 1;
Fig. 3 is a diagram exemplifying the structure of a desktop information processing apparatus according to an embodiment;
Fig. 4 is a block diagram exemplifying the structure of a moving power supply according to embodiment 1;
Fig. 5 is a diagram exemplifying a specific operation;
Fig. 6 is a diagram exemplifying the movement of a moving power supply according to a specific operation;
Fig. 7 is a flowchart exemplifying the actions of embodiment 1;
Fig. 8 is a diagram exemplifying the structure of a system observed from above, in which a plurality of moving power supply are arranged;
Fig. 9 is a block diagram exemplifying the structure of an applied moving power supply;
Fig. 10 is a flowchart exemplifying the actions of stopping a moving power supply according to shot images;
Fig. 11 is a flowchart exemplifying the actions of stopping a moving power supply according to the volume of collected sound data; and
Fig. 12 is a flowchart exemplifying the actions carried out by a moving power supply when a proper temperature is set.

### DETAILED DESCRIPTION

In accordance with an embodiment, a power supply system comprises a rail, a sensor and a moving body. The sensor is arranged along the rail. The moving body which advances along the rail comprises a power supply unit and a control unit. The power supply unit supplies power for an information terminal device. The control unit conducts a control to stop the moving body at the position of the sensor.

In accordance with an embodiment, a power supply system comprises a rail and a moving body. The moving body which advances along the rail comprises: an image pickup unit; a power supply unit configured to supply power for an information terminal device; and a control unit configured to stop the moving body according to the image data obtained by the image pickup unit.

In an embodiment, the table in a meeting room or restaurant is additionally provided with a movable power supplier so that a mobile terminal device can be powered at any seat of the table to free the user of the mobile terminal device from paying attention to the residual battery capacity of the mobile terminal device.

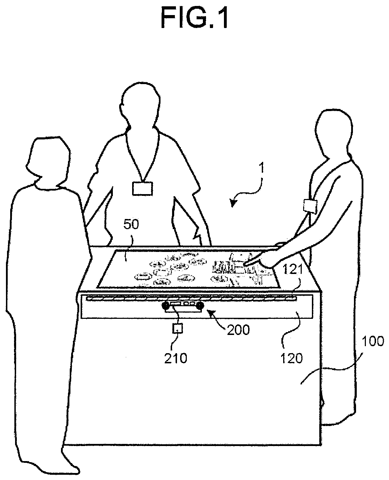

Fig. 1 is a diagram exemplifying the structure of a system according to an embodiment. According to an embodiment, a system 1 (a power supply system) comprises a desktop information processing apparatus 100 and a moving power supply 200. The desktop information processing apparatus 100 is a computer which also functions as a table and which has a large touch panel display 50 on the top surface. The user displays conference documents and images on the touch panel display 50 and participates in the conference or meeting by operating the touch panel display 50.

A groove 120 recessed towards the inside of the housing of the desktop information processing apparatus 100 is formed nearby the top surface of the desktop information processing apparatus 100, a rail 121 is formed on the groove 120 (on the back of the top surface of the table). The rail 121 is arranged round the
periphery of the top plate of the desktop information processing apparatus 100. The moving power supply 200 is an object which moves along a path formed by the rail 121 and which is equipped with a support unit for preventing the moving power supply from falling from the rail 121. The moving power supply 200 is provided with a terminal 210 which can be connected with a mobile terminal device to supply power for the mobile terminal device.

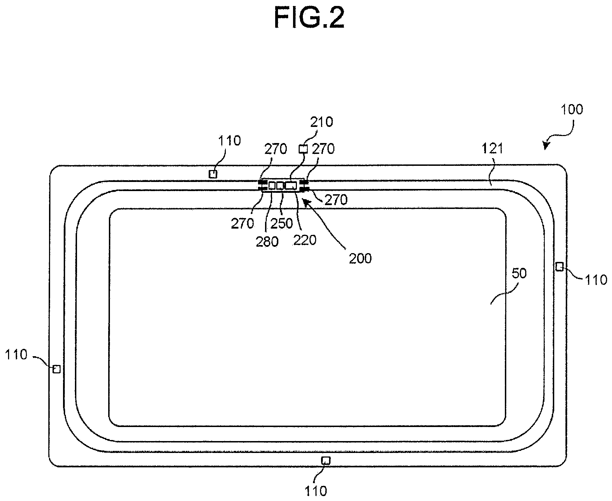

Fig. 2 is a schematic diagram exemplifying the structure of the desktop information processing apparatus 100 observed from above. The rail 121 comprises a conductor through which the power of a commercial power supply is supplied to the battery 220 of the moving power supply 200. Power can be supplied or power can be supplied from the rail 121 to the moving power supply 200 using the conventional technology. As a conventional technology, a rail is paved on the ceiling of a room, and a spotlight or a car model is arranged on the rail as disclosed in JP 2012-150117. The spotlight or car model is electrically connected with the rail so as to be supplied with power from a commercial power supply through the rail which serves as a transfer medium. That is, the rail is supplied with power from the commercial power supply so that the power is supplied to the spotlight or car model via the conductor in the rail. Then, the spotlight is on or the car model is moved.

The desktop information processing apparatus 100 is provided with one or more infrared ray emitting units 110. In the embodiment, the infrared ray emitting units 110 are located at four positions on four sides of the top plate of the desktop information processing apparatus 100 and arranged along the rail 121. The moving power supply 200 stops moving when the infrared ray emitted by the infrared ray emitting unit 110 is received by the infrared ray receiving unit 250 of the moving power supply 200. The LED unit 280 of the moving power supply 200 emits light when the moving power supply 200 stops moving so that the user can know where the moving power supply 200 is. The user determines the position of the moving power supply 200 by means of the light of the LED so as to connect the terminal 210 with a carried mobile terminal device. Then, the battery 220 supplies power for the mobile terminal device. Further, to help the user recognize the light emitted by the LED, the top of the desktop information processing apparatus 100 is preferably made from a transparent material such as glass.

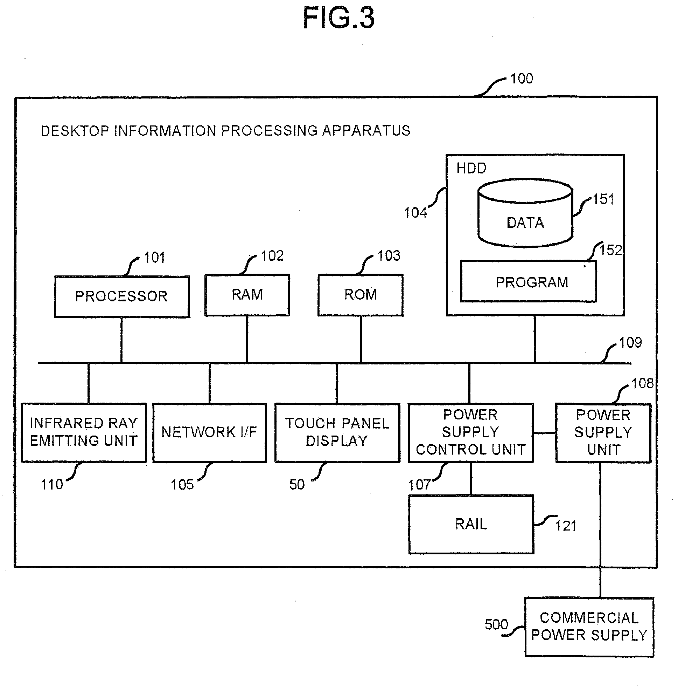

Fig. 3 is a block diagram exemplifying the structure of the desktop information processing apparatus 100. The desktop information processing apparatus 100 is a table-shaped computer equipped with a processor 101, a Random Access Memory (RAM) 102, a Read Only Memory (ROM) 103, a Hard Disk Drive (HDD) 104, an infrared ray emitting unit 110, a network Interface (I/F) 105, a touch panel display 50, a power supply control unit 107, a rail 121 and a power supply unit 108 each of which includes a bus line 109 for input and output.

The processor 101 is a computing device such as a Central Processing Unit (CPU). The processor 101 develops in RAM 102 the programs stored in the ROM 103 or the programs 152 and the data 151 stored in the HDD 104 and executes the developed programs or data, thereby providing various functions while cooperating with each piece of hardware. The RAM 102 is a primary memory device, and the ROM 103 is a non-volatile memory device for storing system programs.

The HDD 104 is an auxiliary non-volatile memory device for storing the programs 152 or the data for a control action. The infrared ray emitting units 110 are arranged along the rail 121 to irradiate the rail 121 with infrared ray from the directions vertical to the path direction of the rail 121. In the embodiment, four infrared ray emitting units 110 are configured, as stated above.

The network I/F 105, which a unit based on the IEEE802.11 wireless communication standard, controls the data communication with an external device. The touch panel display 50 arranged on the top surface of the table functions as an interface for the interaction with the user. That is, the touch panel display 50 displays information (images) for the user and receives an operation from the user.

The power supply control unit 107, which is a device for controlling the power supply from the power supply unit 108, controls the power supply for the rail 121 or for the units in the desktop information processing apparatus 100 such as the processor 101. The power supply unit 108 is a unit which supplies working power for the desktop information processing apparatus 100 and which is connected with a commercial power supply 500 via a plug.

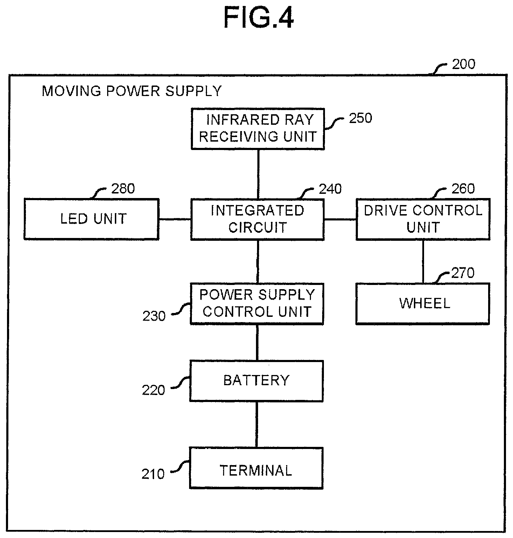

Fig. 4 is a block diagram exemplifying the structure of the moving power supply 200. The moving power supply 200 comprises an infrared ray receiving unit 250, an integrated circuit 240, a power supply control unit 230, a battery 220, a terminal 210, an LED unit 280, a drive control unit 260 and a wheel 270. The integrated circuit 240, the power supply control unit 230 and the drive control unit 260 constitute a control unit.

The integrated circuit 240 is a unit which comprehensively controls the actions of the moving power supply 200. In the embodiment, it is assumed that the integrated circuit 240 is an Application specific integrated circuit (ASIC). In addition to ASIC, the integrated circuit 240 may also be a software controller of a CPU or another installation.

The power supply control unit 230 conducts a control so that the power supplied through the rail 121 can be used inside the moving power supply 200. The power obtained through the rail 121 partially becomes the power stored by the battery 220. The power supply control unit 230 also conducts a control related to the power storage so that the power in the battery 220 is discharged when the power supplied from the rail 121 is cut off.

The terminal 210 is a terminal which can be connected with the mobile terminal device carried by the user. Further, in the embodiment, only one terminal 210 is arranged, however the configuration of more than one terminal 210 is applicable, depending on the type or the carrier of the mobile terminal device.

The LED unit 280 emits visible light under the control of the integrated circuit 240. The user can determine the position of the moving power supply 200 with the use of the light as a mark. The drive control unit 260 rotates and controls the wheel 270 by using the power supplied and controlled by the power supply control unit 230 as a drive source. The wheel 270 is rotated under the control of the drive control unit 260 to move the moving power supply 200.

Further, the power from the commercial power supply 500 is sequentially supplied to the power supply unit 108, the power supply control unit 107 and the rail 121 of the desktop information processing apparatus 100. Further, through the rail 121, the power is sequentially supplied to the power supply control unit 230, the battery 220 and the terminal 210 of the moving power supply 200 and the movable terminal device. Further, the power stored in the battery 220 is supplied to the movable terminal device when no power is supplied from the commercial power supply 500.

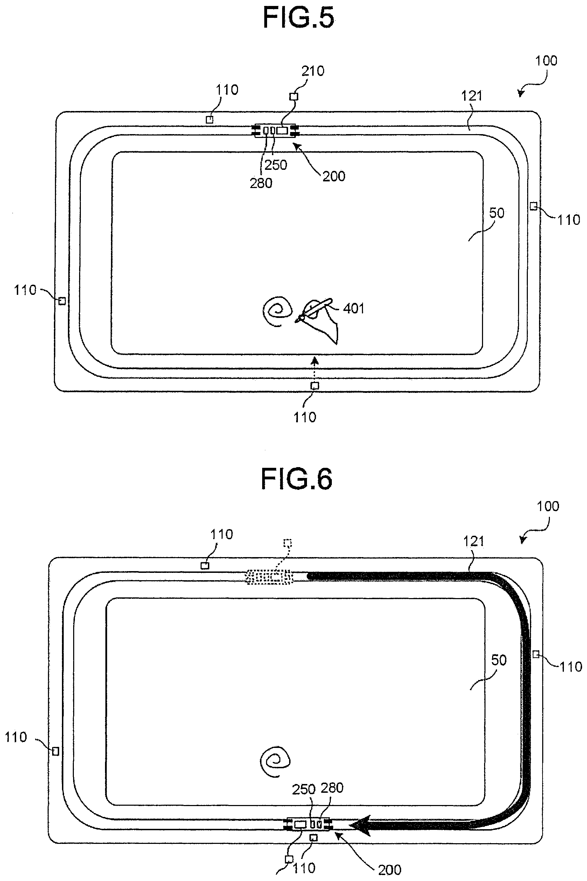

Fig. 5 and Fig. 6 are diagrams exemplifying the actions carried out by the moving power supply 200 to determine the position of a user and move to the position. The user implements a predefined operation (e.g. draws a circle repeatedly, as shown in Fig. 5) on the touch panel display 50 of the desktop information processing apparatus 100. As shown in Fig. 6, the moving power supply 200 moves according to the position where the operation is implemented. As the predefined operation, the user draws a given mark with fingertip or a pen 401, as shown in Fig. 5, or presses a displayed software key.

The infrared ray emitting unit 110 nearby the touch panel display 50 is started to emit infrared ray when a specific operation is implemented on the touch panel display 50. In the example shown in Fig. 5, the specific operation is implemented below a paper surface, thus, the infrared ray emitting unit 110 below the paper surface is started to emit infrared ray in the direction indicated by the arrow. Further, the power supply control unit 107 supplies power for the rail 121 when the specific operation is implemented. After being powered, the moving power supply 200 moves along the path of the rail 121.

The infrared ray receiving unit 250 of the moving power supply 200 receives infrared ray when the moving power supply 200 moves to the position of the infrared ray emitting unit 110 which emits infrared ray. If infrared ray is received by the infrared ray receiving unit, then the moving power supply 200 stops at the position where the infrared ray is emitted. That is, the moving power supply 200 stops at the position where the moving power supply 200 is irradiated by an infrared ray emitting unit 110. The LED unit 280 is turned on after the moving power supply 200 stops so that the user can know where the moving power supply 200 is.

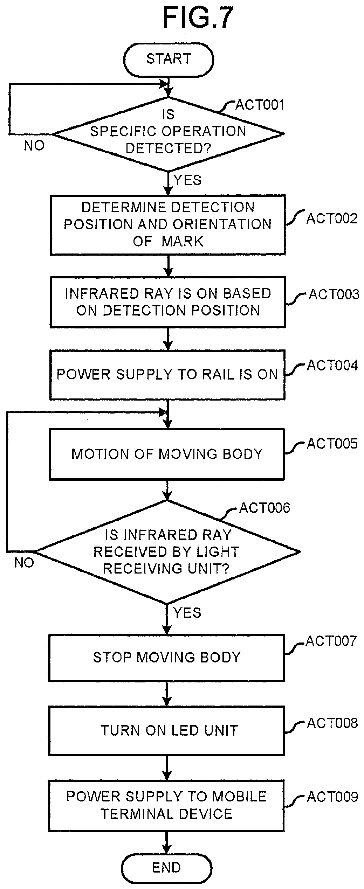

Fig. 7 is a flowchart exemplifying the actions of an embodiment. The processor 101 of the desktop information processing apparatus 100 determines an operation on the touch panel display 50 (Act 001). Further. The processor 101 develops the programs 152 or the data 151 which are/is imported in the HDD 104 in advance in the RAM 102 and executes the programs 152 to implement various actions. After detecting a specific operation (Act 001: Yes), the processor 101 determines the position where the specific operation is implemented (the coordinate position of the operation on the touch panel display 50) (Act 002). For example, if the specific operation is an operation of drawing a mark, then the processor 101 also determines the orientation of the mark drawn here.

The processor 101 starts the infrared ray emitting unit 110 corresponding to the position and the orientation of the detected mark to cause the infrared ray emitting unit 110 to emit infrared ray. The processor 101 stops the other started infrared ray emitting units 110 (Act 003). For example, after determining the one of the four sides forming the quadrangular display area of the touch panel display 50 the drawn mark is closest to, the processor 101 starts the infrared ray emitting unit 110 corresponding to the side. Further, the processor 101 develops a specific mark image in the RAM 102 and rotates the image to determine an identical or approximate orientation.

The processor 101 controls the power supply control unit 107 to supply power for the rail 121 or power the rail 121 on (Act 004). After being powered on through the rail 121, the moving power supply 200 moves along the rail 121. The power supply control unit 230 of the moving power supply 200 receives the power supplied from the rail 121. The integrated circuit 240 drives the drive control unit 260 with part of the power supplied. Then, the wheel 270 rotates, and the moving power supply 200 moves. The moving power supply 200 moves until infrared ray is received by the infrared ray receiving unit 250 (Act 006: loop of No). The moving power supply 200 stops (Act 007) when light is received by the infrared ray receiving unit 250 (Act 006: Yes). If a signal indicating that infrared ray received is input from the infrared ray receiving unit 250, then the integrated circuit 240 outputs a stop signal to the drive control unit 260. Then, the wheel 270 stops rotating.

Further, if a signal indicating that infrared ray received is input from the infrared ray receiving unit 250, then a signal indicating the emission of light is output from the integrated circuit 240 to the LED unit 280. Then, the LED unit 280 emits light (Act 008).

The user determines the position of the moving power supply 200 by means of the light of the LED unit so as to connect the terminal 210 with the carried mobile terminal device to supply power for the mobile terminal device (Act 009) .

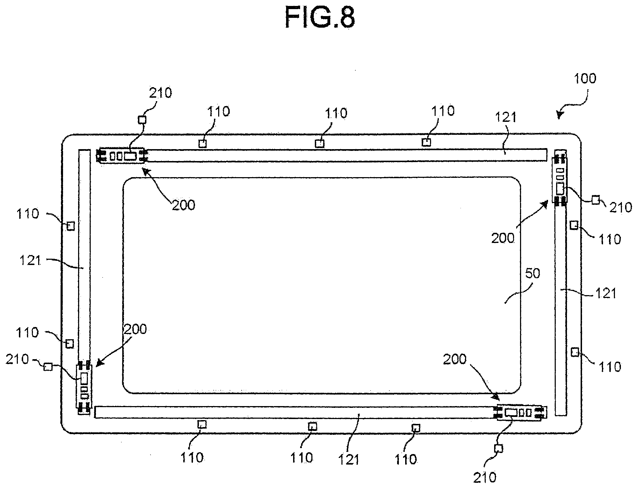

In the foregoing embodiment, only one moving power supply 200 is arranged, and four infrared ray emitting units 110 are arranged on four sides of a table, however, the present invention is not limited to this. It is also applicable that more than one moving power supply 200 is arranged and more infrared ray emitting units 110 are arranged, as shown in Fig. 8, depending on the size of the table. Further, as shown in Fig. 8, in addition to be circularly arranged on the periphery of a table, the rail 121 may also be arranged round the periphery of the table in segments.

In the foregoing example, the rail 121 is powered on when a specific operation is conducted (refer to Act 004), the rail 121 may also be continuously powered on. Further, an ON/OFF control may be conducted to switch the battery 220 between the powered-on state and the powered-off state according to the remaining capacity of the battery 220.

In the foregoing example, power supply is realized through the terminal 210 in a wired connection manner, however, power supply may also be conducted in a noncontact manner.

Further, in the foregoing example, the moving power supply 200is charged through the rail 12, and then supplies power to the mobile terminal device. However, the power supply for a mobile terminal device is not limited to this. It is also applicable that the battery 220 in the moving power supply 200 is charged in advance so as to supply the power stored therein for the mobile terminal device.

### (Application example)

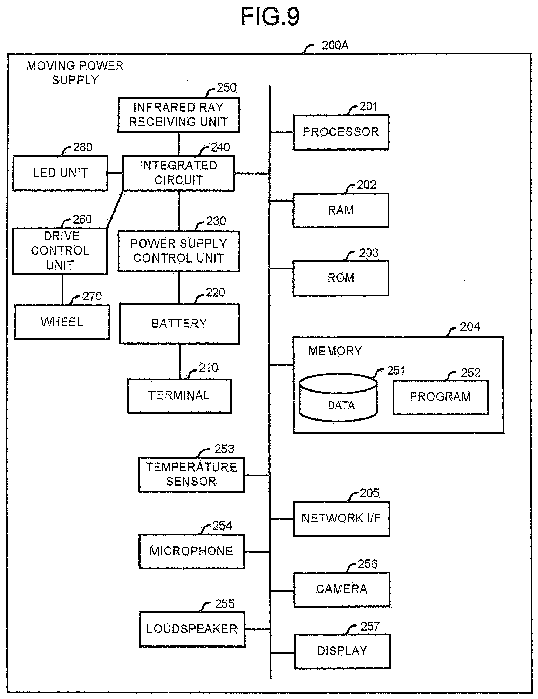

The foregoing moving power supply 200 can also be applied to a conference system or adjusting the temperature of an air conditioner. Fig. 9 exemplifies the structure of a moving power supply. In addition to each unit of the foregoing moving power supply 200, the moving power supply 200A shown in Fig. 9 further comprises a processor 201, an RAM 202, an ROM 203, a memory 204, a network I/F 205, a temperature sensor 253, a microphone 254, a loudspeaker 255, a camera 256 and a display 257.

The processor 201, the RAM 202 and the ROM 203 are identical to those of the foregoing desktop information processing apparatus 100. The memory 204 is an auxiliary non-volatile memory in which programs 252 or data 251 executed by the processor 201 are/is stored in advance.

The network I/F 205 is a unit for controlling near field wireless communications such as Infrared ray Data Association (IrDA) or Near Field Communication (NFC) or the communication in a Wireless Local Area Network (WLAN). The temperature sensor 253 is arranged at least on one of the outer side or the inner side of the housing of the moving power supply 200A. The temperature sensor 253 detects the ambient temperature of the moving power supply 200A and the internal temperature of the moving power supply 200A. To improve detection accuracy, the temperature sensors 253 are arranged on both the outer side and the inner side of the housing of the moving power supply 200A.

The microphone 254 is arranged on the outer side of the housing of the moving power supply 200A to collect sound outside the moving power supply 200A. The collected sound data is temporarily stored in the RAM 202. The camera 256 is arranged on the outer side of the housing of the moving power supply 200A to photograph the surroundings of the moving power supply 200A. If the camera 256 is a wide-angle camera, then to some extent, a wider range of surroundings can be photographed. The photographed data is temporarily stored in the RAM 202, and the processor 201 performs an image processing or an object recognition processing for the photographed data using the conventional technology.

The loudspeaker 255 is arranged on the outer side of the housing of the moving power supply 200A to output sound to the outside of the moving power supply 200A. The display 257 is arranged on the outer side of the housing of the moving power supply 200A and located at an observable position. The loudspeaker 255 or the display 257 is used for teleconference. That is, the network I/F 205 receives the sound data or image data collected at a distant place, and the loudspeaker 255 or display 257 outputs the sound data or image data.

In the application example, a structure consisting of the integrated circuit 240, the power supply control unit 230, the drive control unit 260, the processor 201, the RAM 202, the ROM 203 and the memory 204 functions as a control unit.

The exemplary installation with the structure shown in Fig. 9 has the following functions. With each of these functions, the processor 201 develops the programs 252 and data 251 stored in the memory 204 in the RAM 202 and executes the programs 252 and data 251 to cooperate with each piece of hardware.

The mobile terminal device is detected through the communication unit which carries out near field wireless communication such as IrDA and NFC or wireless communication using the network I/F 205 and the communication unit of the movable terminal device. The moving power supply 200A starts to supply power when the detection is carried out.

The processor 201 performs an object recognition processing on the images taken by the camera 256 to determine the position of a mobile terminal device placed on the top surface of the desktop information processing apparatus 100. The moving power supply 200A moves to the determined position. The processor 201 determines the user using an object recognition technology based on the images taken by the camera 256. Further, the processor 201 also determines the position of the user based on the images taken by the camera 256. The moving power supply 200A moves to the determined position. The object recognition technology is the conventional technology.

Further, the processor 201 determines the position of the user according to the volume of the sound collected by the microphone 254 (the position where the volume of the collected sound is above a threshold). The moving power supply 200A moves to the position.

Through the foregoing actions of the camera 256 and the microphone 254, the moving power supply 200A may also be stopped at another position where a more proper stop control can be conducted in addition to the position where the infrared ray emitting unit 110 is configured.

Further, the moving power supply 200A carrying the microphone 254, the loudspeaker 255, the camera 256 and the display 257 can also function as a conference system. The processor 201 determines the user according to the sound data collected by the microphone 254 using the conventional technology, thereby determining the participants of a conference. Comparative sound data of a plurality of users are pre-registered in the memory 204, and the processor 201 determines a user by comparing the collected sound data with the registered data.

The processor 201 sends the image data taken by the camera 256 via the network I/F 205. The processor 201 sends the sound data collected by the microphone 254 via the network I/F 205. Further, the processor 201 displays the image data received via the network I/F 205 on the display 257. The processor 201 outputs the sound data received via the network I/F 205 to the loudspeaker 255. In this way, the user can transmit information at a long distance.

Further, the moving power supply 200A is capable of storing the data obtained by the microphone 254 or the camera 256 in the memory 204 as a conference record. Further, the moving power supply 200A moves to be nearby the user so that the sound collected by the microphone 254 or the image taken by the camera 256 is clearer.

The moving power supply 200A moves to be nearby the user so that the temperature sensor 253 is capable of detecting the ambient temperature of the user. Moreover, the moving power supply 200A is capable of controlling an air conditioner to adjust the environmental temperature of the user to be proper. The processor 201 controls the network I/F 205 to establish a communication between the air conditioner and the moving power supply 200A. The processor 201 sends temperature information to the air conditioner so as to provide a proper temperature for the user. As an example, it is assumed that the temperature comfortable to a human body is a specific value which is stored in the memory 204 in advance, and the processor 201 compares the temperature detected by the temperature sensor 253 with the specific value to control the network I/F 205 to output temperature information. The temperature information may be the difference of the specific value and the detected temperature or the specific value. The temperature information may also be a correction value. Besides, the temperature sensor 253 further detects the abnormal heating during a power supply process to cut off power supply in the case of abnormal heating.

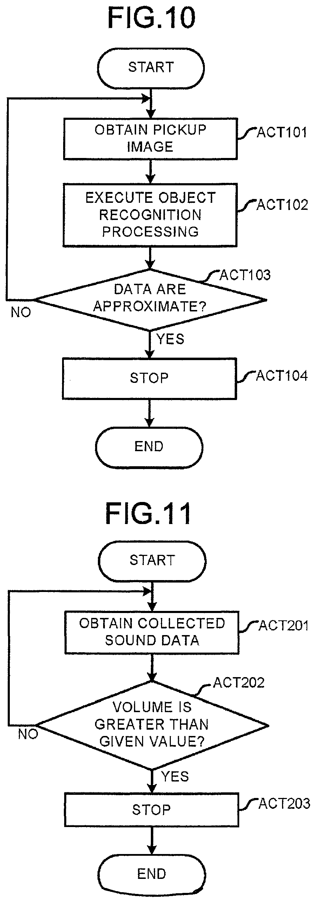

Fig. 10 is a flowchart exemplifying the actions of stopping a moving power supply according to shot images. Fig. 10 is a flowchart exemplifying the actions carried out when the moving power supply 200A starts to move. The processor 201 obtains the data obtained by the camera 256 (Act 101) and carries out an object recognition processing using the conventional technology (Act 102). Further, the comparative data needed for the object recognition is registered in the memory 204 in advance. The processor 201 compares the comparative data in the memory 204 with the image data obtained by the camera (image data subjected to an object extraction processing) to determine whether or not the data are approximate (Act 103). The determination is made using the conventional technology.

If the data are approximate (Act 103: Yes), the integrated circuit 240 stops the moving power supply 200A (Act 104). If the data are not approximate (Act 103: No), the flow returns to Act 101 so that the processor 201 acquires new image data (Act 101). As the moving power supply 200A moves at any time, the image taken by the camera is a new image.

Fig. 11 is a flowchart exemplifying the actions of stopping the moving power supply 200A according to the volume of collected sound data. Fig. 11 is a flowchart exemplifying the actions carried out when the moving power supply 200A starts to move. The processor 201 acquires the sound data collected by the microphone 254 (Act 201) and determines whether or not the volume of the sound data is greater than a given value (Act 202).

If the volume of the sound data is greater than the given value, the integrated circuit 240 stops the moving power supply 200A (Act 203).If the volume of the sound data is below the given value (Act 202: No), the flow returns to Act 201 so that the processor 201 acquires new sound data (Act 201). As the moving power supply 200A moves at any time, the volume of sound data changes as well.

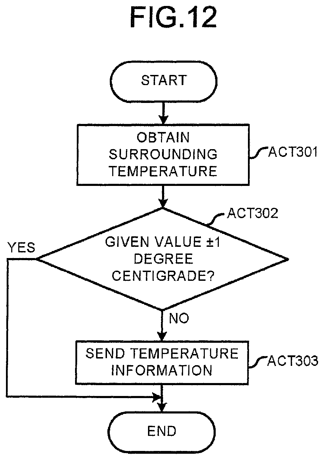

Fig. 12 is a flowchart exemplifying the actions carried out by a moving power supply when a proper temperature is set. Fig. 12 is a flowchart exemplifying the actions carried out after the moving power supply 200A stops moving. The actions shown in the flowchart of Fig. 12 may also be carried out periodically after the moving power supply 200A is stopped. The processor 201 acquires the external temperature detected by the temperature sensor 253 (Act 301) and determines whether or not the temperature value is within a given range (±1 degree centigrade, in this example) (Act 302).

If the temperature value is within the given range (Act 302: Yes), the processor 201 ends the current processing without carrying out any operation.

If the temperature value is not within the given range (Act 302: No), the processor 201 controls the network I/F 205 to send temperature information to an air conditioner (Act 303).

In each foregoing embodiment, the functions for realizing each embodiment are pre-stored in an apparatus, however, the present invention is not limited to this, the same functions may also be downloaded from a network, or an element equipped with a memory medium in which the same functions are stored may be installed an apparatus. The memory medium may be any memory medium that is capable of storing programs in a CD-ROM and is readable to an apparatus, but not limited to be of any form. Further, the functions achieved by an installed or downloaded program can also be achieved through the cooperation with an OS (Operating System) in an apparatus.

According to an embodiment, a mobile terminal device can be supplied with power more conveniently at a proper position.

While certain embodiments have been described, these embodiments have been presented by way of example only, and are not intended to limit the scope of the invention.

## Claims

1. A table comprising a power supply system, the power supply system comprising:
a rail (121);
a moving body (200) advancing along the rail; wherein
the moving body comprises a power supply unit configured to supply power for an information terminal device and a drive control unit, and wherein
the power supply system further comprises a plurality of infrared ray emitting units (110) arranged along the rail;
the rail is arranged round the periphery of a top plate of the table; and
the moving body further comprises an infrared ray receiving unit (250) wherein the drive control unit is configured to conduct a control to stop the moving body at the position of one of the infrared ray emitting units when the infrared ray emitted by the infrared ray emitting units (110) is received by the infrared ray receiving unit (250).

2. The table according to claim 1, wherein
the rail is configured to supply the power from a commercial power supply to the power supply unit.

3. The table according to claim 1 or 2, wherein
the moving body further comprises a light emitting unit; and
the drive control unit is configured to turn on the light emitting unit when the moving body stops at the position of the infrared emitting means.

4. The table according to any one of claims 1 to 3, wherein
the moving body further comprises:
an image pickup unit
wherein the control unit is configured to conduct a control to stop the moving body according to the image data obtained by the image pickup unit.

5. The table according to claim 4, wherein
the moving body further comprises a microphone for collecting sound from the outside of the moving body; and
the drive control unit is configured to conduct a control to stop the moving body according to the volume of the sound data collected by the microphone.

6. The table according to claim 4, wherein
the moving body further comprises: a network unit configured to control the communication with an external device and the moving body;
a microphone configured to collect sound from the outside of the moving body;
a display; and
a loudspeaker; and
the drive control unit is configured to cause the network unit to send the image data obtained by the image pickup unit and the sound data collected by the microphone, to display the image data received by the network unit on the display and to output the sound data received by the network unit to the loudspeaker.

7. The table according to any one of claims 4 to 6, wherein
the moving body further comprises a temperature sensor for detecting the temperature of the outside of the moving body and a network unit communicating with an air conditioner; and
the drive control unit is configured to output temperature information to the network unit to change the temperature detected by the moving body to a preset temperature according to the temperature detected by the temperature sensor.

## Patentansprüche

1. Tisch, umfassend ein Leistungsversorgungssystem, wobei das Leistungsversorgungssystem umfasst:
eine Schiene (121);
einen sich bewegenden Körper (200), der entlang der Schiene vorrückt; wobei der sich bewegende Körper eine Leistungsversorgungseinheit umfasst, die konfiguriert ist, Leistung für eine Informationsterminalvorrichtung und eine Antriebssteuer- bzw. -regeleinheit zuzuführen, und
wobei das Leistungsversorgungssystem ferner eine Mehrzahl von Infrarotstrahlenemissionseinheiten (110) umfasst, die entlang der Schiene angeordnet sind;
wobei die Schiene um den Umfang einer oberen Platte des Tischs herum angeordnet ist; und
wobei der sich bewegende Körper ferner eine Infrarotstrahlenempfangseinheit (250) umfasst, wobei die Antriebssteuer- bzw. -regeleinheit konfiguriert ist, eine Steuerung bzw. Regelung zum Stoppen des sich bewegenden Körpers an der Position einer der Infrarotstrahlenemissionseinheiten auszuführen, wenn der von den Infrarotstrahlenemissionseinheiten (110) emittierte Infrarotstrahl von der Infrarotstrahlenempfangseinheit (250) empfangen wird.

2. Tisch nach Anspruch 1, wobei
die Schiene konfiguriert ist, die Leistung von einer kommerziellen Leistungsversorgung an die Leistungsversorgungseinheit zuzuführen.

3. Tisch nach Anspruch 1 oder 2, wobei
der sich bewegende Körper ferner eine Lichtemissionseinheit umfasst; und die Antriebssteuer- bzw. -regeleinheit konfiguriert ist, die Lichtemissionseinheit einzuschalten, wenn der sich bewegende Körper an der Position der Infrarotstrahlenemissionsmittel stoppt.

4. Tisch nach einem der Ansprüche 1 bis 3, wobei der sich bewegende Körper ferner umfast:
eine Bildaufnahmeeinheit,
wobei die Steuer- bzw. Regeleinheit konfiguriert ist, eine Steuerung bzw. Regelung zum Stoppen des sich bewegenden Körpers gemäß den von der Bildaufnahmeeinheit erhaltenen Bilddaten auszuführen.

5. Tisch nach Anspruch 4, wobei
der sich bewegende Körper ferner ein Mikrofon zum Sammeln von Ton von der Außenseite des sich bewegenden Körpers umfasst; und
die Antriebssteuer- bzw. -regeleinheit konfiguriert ist, eine Steuerung bzw. Regelung zum Stoppen des sich bewegenden Körper gemäß der Lautstärke der von dem Mikrofon gesammelten Tondaten auszuführen.

6. Tisch nach Anspruch 4, wobei
der sich bewegende Körper ferner umfasst: eine Netzwerkeinheit, die konfiguriert ist, die Kommunikation mit einer externen Vorrichtung des sich bewegenden Körpers zu steuern bzw. zu regeln;
ein Mikrofon, das konfiguriert ist, Ton von der Außenseite des sich bewegenden Körpers zu sammeln;
eine Anzeige; und
einen Lautsprecher; und
wobei die Antriebssteuer- bzw. -regeleinheit konfiguriert ist, die Netzwerkeinheit zu veranlassen, die von der Bildaufnahmeeinheit erhaltenen Bilddaten und die von dem Mikrofon gesammelten Tondaten zu senden, um die von der Netzwerkeinheit empfangenen Bilddaten auf der Anzeige anzuzeigen und die von der Netzwerkeinheit empfangenen Tondaten an den Lautsprecher auszugeben.

7. Tisch nach einem der Ansprüche 4 bis 6, wobei
der sich bewegende Körper ferner einen Temperatursensor zum Erfassen der Temperatur der Außenseite des sich bewegenden Körpers und eine Netzwerkeinheit umfasst, die mit einer Klimaanlage in Verbindung steht bzw. kommuniziert; und
die Antriebssteuer- bzw. -regeleinheit konfiguriert ist, Temperaturinformationen an die Netzwerkeinheit auszugeben, um die von dem sich bewegenden Körper erfasste Temperatur auf eine voreingestellte Temperatur gemäß der von dem Temperatursensor erfassten Temperatur zu ändern.

## Revendications

1. Table comprenant un dispositif d'alimentation en énergie, le dispositif d'alimentation en énergie comprenant :
un rail (121) ;
un corps mobile (200) se déplaçant le long du rail ;
dans laquelle
le corps mobile comprend une unité d'alimentation en énergie configurée de manière à délivrer de l'énergie à un dispositif formant borne d'information et une unité de commande d'attaque,
et dans laquelle
le dispositif d'alimentation en énergie comprend, en outre, une pluralité d'unités émettrices de rayons infrarouges (110) agencées le long du rail ;
le rail est agencé autour de la périphérie d'une plaque supérieure de la table ; et
le corps mobile comprend, en outre, une unité de réception de rayon infrarouge (250) dans laquelle
l'unité de commande d'attaque est configurée de manière à conduire une commande afin d'arrêter le corps mobile à la position de l'une des unités émettrices de rayons infrarouges lorsque le rayon infrarouge émis par les unités émettrices de rayons infrarouges (110) est reçu par l'unité de réception de rayon infrarouge (250).

2. Table selon la revendication 1, dans laquelle
le rail est configuré de manière à délivrer de l'énergie à partir d'une source d'alimentation d'énergie commerciale à l'unité d'alimentation en énergie.

3. Table selon la revendication 1 ou 2, dans laquelle
le corps mobile comprend, en outre, une unité émettrice de lumière ; et
l'unité de commande d'attaque est configurée de manière à activer l'unité émettrice de lumière lorsque le corps mobile s'arrête à la position des moyens d'émission à infrarouge.

4. Table selon l'une quelconque des revendications 1 à 3, dans laquelle
le corps mobile comprend, en outre :
une unité d'acquisition d'image
dans laquelle l'unité de commande est configurée de manière à conduire une commande afin d'arrêter le corps mobile en fonction des données d'image obtenues par l'unité d'acquisition d'image.

5. Table selon la revendication 4, dans laquelle
le corps mobile comprend, en outre, un microphone destiné à collecter un son depuis l'extérieur du corps mobile ; et
l'unité de commande d'attaque est configurée de manière à conduire une commande afin d'arrêter le corps mobile en fonction du volume des données sonores collectées par le microphone.

6. Table selon la revendication 4, dans laquelle
le corps mobile comprend, en outre : une unité de réseau configurée de manière à commander la communication avec un dispositif externe et le corps mobile ;
un microphone configuré de manière à collecter un son depuis l'extérieur du corps mobile ;
un dispositif affichage ; et
un haut-parleur ; et
l'unité de commande d'attaque est configurée de manière à amener l'unité de réseau à envoyer les données d'image obtenues par l'unité d'acquisition d'image et les données sonores collectées par le microphone, afin d'afficher les données d'image reçues par l'unité de réseau sur le dispositif affichage et de délivrer les données sonores reçues par l'unité de réseau au haut-parleur.

7. Table selon l'une quelconque des revendications 4 à 6, dans laquelle
le corps mobile comprend, en outre, un capteur de température destiné à détecter la température de l'extérieur du corps mobile et une unité de réseau communiquant avec un conditionneur d'air ; et
l'unité de commande d'attaque est configurée de manière à délivrer des informations de température à l'unité de réseau afin de modifier la température détectée par le corps mobile pour une température prédéfinie en fonction de la température détectée par le capteur de température.
